# EUROPÄISCHE PATENTSCHRIFT

(11) **EP 3 978 221 B1**
(45) Veröffentlichungstag und Bekanntmachung des Hinweises auf die Patenterteilung: **03.01.2024**
(21) Anmeldenummer: 21195858.2
(22) Anmeldetag: 09.09.2021
(51) Int. Cl.: B29C 49/12, B29C 49/42, B29C 49/58, B29C 49/06, B29K 67/00, B29L 31/00

(54) **VORRICHTUNG UND VERFAHREN ZUM UMFORMEN VON KUNSTSTOFFVORFORMLINGEN ZU KUNSTSTOFFBEHÄLTNISSEN MIT VERBESSERTER SPÜLSTANGENANORDNUNG**
DEVICE AND METHOD FOR FORMING PLASTIC PREFORMS INTO PLASTIC CONTAINERS WITH IMPROVED FLUSH BAR ARRANGEMENT
DISPOSITIF ET PROCÉDÉ DE FORMAGE DES PRÉFORMES EN MATIÈRE PLASTIQUE EN RÉCIPIENTS EN MATIÈRE PLASTIQUE POURVUS D'AGENCEMENT DE BARRE D'INJECTION AMÉLIORÉ

(30) Priorität: 05.10.2020 DE 102020125957
(43) Veröffentlichungstag der Anmeldung: 06.04.2022
(73) Patentinhaber: Krones AG, 93073 Neutraubling (DE)
(72) Erfinder: Meier, Dominik, 93073 Neutraubling (DE); Hoellriegl, Thomas, 93073 Neutraubling (DE)
(74) Vertreter: Hannke Bittner & Partner mbB Regensburg

(56) Entgegenhaltungen:
- EP-A1- 2 987 612
- WO-A1-01/19594
- DE-A1-102011 008 132
- DE-B3-102009 061 262
- US-A1- 2018 134 537
- US-B1- 6 485 669

## Beschreibung

Die vorliegende Erfindung bezieht sich auf eine Vorrichtung in einem Verfahren zum Umformen von Kunststoffvorformlingen zu Kunststoffbehältnissen. Derartige Vorrichtungen und Verfahren sind aus dem Stand der Technik seit Langem bekannt, und beispielsweise in den Patentschriften US6485669B1, US2018/134537A1, DE102009061262B3 und EP2987612A1 beschrieben. Dabei ist es ebenfalls aus dem Stand der Technik seit Langem bekannt, dass sogenannte Reckstangen eingesetzt werden, welche die Kunststoffvorformlinge während des Expansionsvorgangs auch in ihrer Längsrichtung dehnen. Daneben sind auch Systeme bekannt, bei denen diese Reckstangen als Spülstangen ausgeführt sind, beispielsweise einen Luftleitkanal haben, damit Luft auch während des Expansionsvorgangs direkt an den Boden des Behältnisses geleitet werden kann. Mit derartigen Spülluftsystemen wird bei aus dem Stand der Technik bekannten Blasmaschinen das Bodenzentrum der ausgeprägten Flasche aktiv gekühlt. Durch diesen Vorgang wird die Formstabilität der Flasche beziehungsweise des Behältnisses in kürzerer Zeit erreicht und es sind höhere Maschinenleistungen möglich.

Auch bei dem sogenannten Heat-Set-Prozess wird Spülluft eingesetzt, um gewisse Bereiche des Behältnisses nach deren Ausprägung aktiv zu kühlen und so die Formstabilität in kürzerer Zeit zu gewährleisten.

Zu diesem Zweck befindet sich an einem Reckmodul einer Blasstation eine Spüllufteinheit. Dabei ist üblicherweise ein ortsfestes Spülluftventil vorgesehen, sowie auch eine Arbeitsluftleitung und die mit einem Reckmotor bewegte Kühl- und/oder Spülstange. Wie erwähnt ist dabei diese Kühl- oder Spülstange hohl gebohrt. Die von dem Spülluftventil kommende Arbeitsluft wird über den Schlauch durch die Bohrung zum Bodenzentrum des zu expandierenden Behältnisses beziehungsweise Kunststoffvorformlings geleitet.

Auf diese Weise ergibt sich zwischen dem in Bezug auf die Blasstation ortsfesten Spülluftventil und dem zu kühlenden Bodenzentrum des Behältnisses ein erheblicher Totraum. Das Totraumvolumen setzt sich zusammen aus den Leitungsvolumen und dem Volumen der Spülstangenbohrung. Bei jedem Blasvorgang wird dieses Volumen zusätzlich verbraucht. Auf diese Weise wird der Luftverbrauch der Maschine erhöht und die Wirtschaftlichkeit für den Kunden durch hohe Betriebskosten gesenkt.

Daneben sind im momentanen Stand der Technik die Kühlstangen als zylindrisches Rohr ausgebildet, welches üblicherweise aus einem hochfesten Niro-Rundmaterial mittels Tieflochbohren hergestellt wird. Damit weisen die Kühlstangen dabei über mindestens 40 % ihrer Länge, aufgrund der technischen Einschränkungen der Fertigungsverfahren ein Durchmesserverhältnis von Innendurchmesser zu Außendurchmesser von mehr als 60 %, auf. Typische Längen für derartige Kühlstangen liegen zwischen 600 und 900 mm.

Durch das hohe Durchmesserverhältnis entstehen über weite Teile der stangenartigen Körper beziehungsweise Kühlstangen, große mit Spülfluid gefüllte Räume und dadurch erhebliche Toträume. Auf diese Weise steigt der Luftverbrauch im System. Weiterhin sind aufgrund der schlanken Aufmachungen der Kühlstangen und deren axialer Druckbeanspruchung diese sehr anfällig hinsichtlich Knicken. Das große Verhältnis zwischen dem Innen- und Außendurchmesser verschärft dieses Problem zusätzlich. Aus diesem Grund werden im Stand der Technik üblicherweise festere bzw. härtere aber auch teurere Nirolegierungen als Ausgangsmaterial herangezogen.

Der vorliegenden Erfindung liegt daher die Aufgabe zugrunde, den Totraum bei derartigen Prozessen zu verringern und/oder zu vermeiden und/oder den Luftverbrauch für die Expansion der Behältnisse zu senken. Daneben sollen auch stabilere und weniger beschädigungsanfällige Vorrichtungen geschaffen werden. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine Umformungsstation auf, welche die Kunststoffvorformlinge durch Beaufschlagung mit einem fließfähigen Medium zu den Kunststoffbehältnissen umformt, wobei die Umformungsstation eine Blasform aufweist, welche wiederum einen Hohlraum ausbildet, innerhalb dessen die Kunststoffvorformlinge zu den Kunststoffbehältnissen umformbar sind und wobei die Umformungsstation weiterhin eine Beaufschlagungseinrichtung aufweist, welche die Kunststoffvorformlinge mit dem fließfähigen Medium beaufschlagt, sowie einen stangenartigen Körper, der über eine Mündung der Kunststoffvorformlinge in die Kunststoffvorformlinge einführbar ist. Weiterhin ist eine Bewegungseinrichtung vorgesehen, welche dazu geeignet und bestimmt ist, diesen stangenartigen Körper in der Längsrichtung der Kunststoffvorformlinge zu bewegen, wobei dieser stangenartige Körper einen Kanal zum Leiten des fließfähigen Mediums ausbildet. Weiterhin weist die Umformungsstation eine Ventileinrichtung auf, welche die Zuführung des fließfähigen Mediums in diesen Kanal steuert.

Erfindungsgemäß ist diese Ventileinrichtung an der Bewegungseinrichtung angeordnet und/oder im Verhältnis zwischen einem Innendurchmesser des stangenartigen Körpers und dem Außendurchmesser des stangenartigen Körpers, ist wenigstens abschnittsweise und bevorzugt vollständig kleiner oder gleich 0,5.

Es werden daher zwei Maßnahmen vorgeschlagen, die jedoch beide das Totraumvolumen verkleinern sollen. Bei der ersten Maßnahme wird diese Ventileinrichtung nicht wie bisher stationär angeordnet, sondern unmittelbar an den bewegten Teilen, welche auch die stangenartigen Körper (im Folgenden auch als Reckstange bezeichnet) bewegen. Auf diese Weise können längere Verbindungsleitungen eingespart werden und damit auch Totraumvolumen.

Der zweite Vorschlag bezieht sich auf die Reck- beziehungsweise Spülstange, beziehungsweise den stangenartigen Körper selbst und schlägt eine Reduzierung dessen Innenvolumens vor. Um den Totraum bestehend aus dem Leitungsvolumen der Arbeitsluftleitung und dem Volumen der Bohrung der Spülstange beziehungsweise des stangenartigen Körpers zu verringern wird die Position des Spülluftventils, das heißt die Ventileinrichtung verändert.

Das Ventil ist hier in der bevorzugten Ausgestaltung direkt an der Bewegungseinrichtung, beispielsweise einem Reckschlitten befestigt. Auf diese Weise wird der Absperrpunkt der Spülluft näher zum Spülluftaustritt an den gewählten Stellen des Behälters versetzt und das Totraumvolumen dadurch erheblich reduziert.

Bevorzugt erfolgt eine Arbeitsluftversorgung des Spülluftventils über eine Arbeitsluftzuführung. Falls das Spülluftventil weiterhin Steuerluft benötigen sollte, kann diese ebenfalls über eine Steuerluftzuführung beispielsweise von einer Niederdruckverteilung der Blasstation auf das Spülluftventil, welches bevorzugt an einem Reckschlitten angeordnet ist, übertragen werden. Des Weiteren kann die Steuerluft auch direkt an den Reckschlitten beispielsweise aus der Arbeitsluft mittels einer Druckminderung erzeugt werden. Bei dieser Variante wird lediglich die Arbeitsluftversorgung benötigt.

Bei der zweiten Ausgestaltung wird wie oben erwähnt eine Kühlstange verwendet, die besonders bevorzugt aus einem nahtlos gezogenen Rohr besteht, welches zwischen dem Innendurchmesser und dem Außenumfang ein Verhältnis von kleiner oder gleich 0,5 aufweist. Daneben kann auch ein Halbzeug aus Stahl eingesetzt werden. Vorzugsweise handelt es sich, wie unten genauer beschrieben, um einen niedrig legierten Stahl, der bevorzugt eine Beschichtung aufweist. Diese Beschichtung kann dabei ebenfalls Korrosionseigenschaften und Leiteigenschaften optimieren.

Bevorzugt ist das Verhältnis zwischen dem Innendurchmesser und dem Außendurchmesser in wenigstens 50 % des stangenartigen Körpers kleiner als 0,5, bevorzugt in wenigstens 60 %, bevorzugt in wenigstens 70 %, bevorzugt in wenigsten 80 % und bevorzugt in wenigstens 90 % und besonders bevorzugt über die gesamte Länge des stangeartigen Körpers hinweg.

Bevorzugt ist das Verhältnis zwischen dem Innendurchmesser und dem Außendurchmesser kleiner als 0,48, bevorzugt kleiner als 0,45, bevorzugt kleiner als 0,43, bevorzugt kleiner als 0,41, bevorzugt kleiner als 0,4 und bevorzugt kleiner als 0,38.

Besonders bevorzugt handelt es sich bei dem stangenartigen Körper um ein Rohr und insbesondere um ein zylindrisches Rohr. Durch die hier beschriebenen Vorgehensweisen kann insgesamt der Totraum verringert werden.

Bei einer bevorzugten Ausführungsform weist die Bewegungseinrichtung einen Schlitten auf, der sich in einer Längsrichtung und insbesondere einer Längsrichtung des stangenartigen Körpers bewegt. Insbesondere handelt es sich bei dieser Längsrichtung auch um eine Längsrichtung des zu expandierenden Kunststoffvorformlings.

Besonders bevorzugt handelt es sich wie oben erwähnt bei dem stangenartigen Körper auch um eine Reckstange, das heißt der stangenartige Körper nimmt bevorzugt auch die Funktion wahr, den Kunststoffvorformling in seiner Längsrichtung zu dehnen.

Bei einer weiteren bevorzugten Ausführungsform sind die oben erwähnten Blasformteile an Blasformträgerteilen angeordnet. Diese können insbesondere zum Eingeben eines Kunststoffvorformlings in die Blasform und zum Entnehmen eines gefertigten Behältnisses aus der Blasform geöffnet und geschlossen werden. Bei einer weiteren vorteilhaften Ausführungsform weist die Vorrichtung einen Träger und insbesondere einen drehbaren Träger auf, an dem eine Vielzahl von Umformungsstationen angeordnet ist. Dabei weisen alle diese Umformungsstationen bevorzugt jeweils Blasformen und die hier beschriebenen stangenartigen Körper auf.

Bevorzugt handelt es sich bei dem oben beschriebenen fließfähigen Medium um Luft und insbesondere um Druckluft. Es wäre jedoch auch möglich, dass es sich bei dem fließfähigen Medium um eine Flüssigkeit handelt wobei beispielsweise das Behältnis mit dem abzufüllenden Medium sowohl expandiert als auch befüllt wird.

Bei einer weiteren vorteilhaften Ausführungsform ist die Ventileinrichtung in der Nähe zu dem stangenartigen Körper angeordnet. So kann beispielsweise der stangenartige Körper bereits in ein Gehäuse der Ventileinrichtung eingesteckt sein. Auf diese Weise kann der Totraum noch weiter reduziert werden. Bei einer weiteren vorteilhaften Ausführungsform weist der stangenartige Körper eine stirnseitig beziehungsweise endseitige Öffnung zum Spülen der Kunststoffbehältnisse auf. Dabei ist hier insbesondere an derjenigen Endseite, welche der Ventileinrichtung gegenüberliegt, dieser Öffnung angeordnet und der Kanal erstreckt sich von der Ventileinrichtung zu dieser Öffnung.

Bevorzugt handelt es sich bei der oben beschriebenen Beaufschlagungseinrichtung um eine Blasdüse. Insbesondere handelt es sich dabei um eine Beaufschlagungseinrichtung, welche zum Expandieren des Kunststoffvorformlings an dessen Mündung angelegt wird.

Bevorzugt wird der hier beschriebene Kunststoffvorformling mit mehreren Druckstufen beaufschlagt, wie beispielsweise einem Vorblasdruck, einem Zwischenblasdruck und einem Fertigblasdruck.

Bei einer weiteren bevorzugten Ausführungsform ist eine Länge des stangenartigen Körpers größer als 300 mm, bevorzugt größer als 400 mm, bevorzugt größer als 500 mm, bevorzugt größer als 550 mm und bevorzugt größer als 600 mm. Bei einer weiteren bevorzugten Ausführungsform ist die Länge des stangenartigen Körpers geringer als 1500 mm, bevorzugt geringer als 1300 mm, bevorzugt geringer als 1200 mm, bevorzugt geringer als 1000 mm und bevorzugt geringer als 900 mm.

Bei einer weiteren bevorzugten Ausführungsform ist eine Bewegung der Ventileinrichtung wenigstens zeitweise und bevorzugt vollständig an die Bewegung des stangenartigen Körpers d.h. der Reckstange gekoppelt. So ist es möglich, dass die Ventileinrichtung und der stangenartige Körper an dem gleichen Träger angeordnet sind.

Bei einer weiteren bevorzugten Ausführungsform ist die Ventileinrichtung druckausgeglichen ausgeführt. Diese Ausgestaltung bietet den Vorteil, dass nur diejenigen Kräfte aufgewendet werden, um eine Arbeitsluftleitung sicher abzusperren. Auf diese Weise kann das Ventil sehr klein und leicht ausgeführt werden. Auch ein Reckschlitten und die bewegte Masse kann damit sehr klein gehalten werden. So könnte beispielsweise die Ventileinrichtung eine Vorspanneinrichtung aufweisen, die erst bei einem bestimmten Druck öffnet und/oder schließt.

Bei einer bevorzugten Ausführungsform ist die Ventileinrichtung daher derart gestaltet, dass eine Seite des Ventilkolbens, insbesondere dessen Rückseite ebenfalls mit einem vorgegebenen Druck beaufschlagt wird. Dabei werden bevorzugt die Kolbenkräfte auf der Dichtungsseite des Kolbens und der der Dichtung abgewandten Seite im Wesentlichen gleichgroß oder gleich groß gewählt. (Bevorzugt weisen diese Kolbenkräfte um nicht mehr als 30 %, bevorzugt um nicht mehr als 20 %, bevorzugt um nicht mehr als 10 % und bevorzugt um nicht mehr als 5 % voneinander ab.

Bei einer bevorzugten Ausführungsform handelt es sich bei der Ventileinrichtung um ein pneumatisch betätigtes Ventil. Bei dieser Ausgestaltung ist auch eine Steuerluftzuführung vorgesehen, welche zum Betätigen der Ventileinrichtung dient. Wie oben erwähnt, kann dabei diese Steuerluft auch von einer Arbeitsluftleitung in druckverminderter Form abgezweigt werden. Bevorzugt ist die Ventileinrichtung an einem Abschnitt des stangenartigen Körpers angeordnet und insbesondere an einem Endabschnitt. So ist es möglich, dass ein Ausgang die Ventileinrichtung unmittelbar mit dem stangenartigen Körper verbunden ist, um so weiter Totraum zu reduzieren.

Bei einer weiteren bevorzugten Ausgestaltung ist der stangenartige Körper aus einem Metall und insbesondere aus einem Stahl gefertigt. Auf diese Weise kann die Stabilität des stangenartigen Körpers erhöht werden.

Bei einer weiteren bevorzugten Ausführungsform ist der stangenartige Körper wenigstens abstandsweise beschichtet und insbesondere wenigsten abstandsweise an seiner Außenoberfläche beschichtet. Bevorzugt ist der stangenartige Körper an seiner vollständigen Außenoberfläche und/oder auch an seiner Innenoberfläche beschichtet. Durch diese Beschichtung kann beispielsweise eine Antikorrosionsfähigkeit erreicht werden und/oder eine Beschichtung, welche die Gleitfähigkeiten des stangenartigen Körpers erhöht.

Besonders bevorzugt erstreckt sich der stangenartige Körper zumindest an einem Arbeitsbetrieb durch eine Beaufschlagungseinrichtung wie etwa eine Blasdüse hindurch. Besonders in dieser Ausgestaltung kann eine Beschichtung des Körpers die Gleiteigenschaften des stangenartigen Körpers verbessern. Besonders bevorzugt ist der stangenartige Körper mit einer Substanz beschichtet, welche aus einer Gruppe von Substanzen ausgewählt ist, welche Chrom, Nickel und/oder Kunststoff enthält.

Bei einer weiteren bevorzugten Ausführungsform handelt es sich bei dem Material des stangenartigen Körpers um ein Halbzeug. Als Halbzeug wird im Allgemeinen ein Vormaterial bezeichnet, das heißt ein vorgefertigtes Rohmaterial und/oder Werkstücke oder Halbfabrikate einfacher Form. Diese bestehen in der Regel aus einem einzelnen Material, welches lediglich in eine grundlegende geometrische Form beispielsweise in eine Zylinderform gebracht wurde. So kann es sich bei dem Halbzeug beispielsweise um einen Profilstahl handeln.

Durch die hier beschriebene Vorgehensweise bezüglich des stangenartigen Körpers kann, wie oben erwähnt, eine Verringerung des Totraumvolumens im Spülluftsystem erreicht werden. Daneben können auch die Kosten für die Herstellung verringert werden, da das Ausgangsmaterial Stahl günstiger ist als die oben erwähnten Niro-Verbindungen. Daneben kann auch die Stabilität des stangenartigen Körpers verbessert werden.

Die vorliegende Erfindung ist weiterhin auf einen stangenartigen Körper zum Dehnen von Kunststoffvorformlingen, insbesondere in deren Längsrichtung, gerichtet, wobei der stangenartige Körper einen Kanal zum Leiten eines fließfähigen Mediums aufweist (und insbesondere der stangenartige Körper eine sich in dessen Längsrichtung erstreckende Bohrung aufweist) und der stangenartige Körper einen vorgegebenen Außendurchmesser aufweist sowie einen vorgegebenen Innendurchmesser und der stangenartige Körper eine Länge aufweist, die zwischen 500 und 1000 mm liegt.

Erfindungsgemäß ist der stangenartige Körper aus einem Teil und insbesondere aus Stahl gefertigt um ein Verhältnis zwischen dem Innendurchmesser und dem Außendurchmesser ist kleiner oder gleich 0,5.

Es wird daher auch für den stangenartigen Körper, der insbesondere als Reckstange eingesetzt wird, ein Verhältnis zwischen den Innen- zum Außendurchmesser geringer als 0,5 beansprucht. Der Innendurchmesser des stangenartigen Körpers ist bevorzugt auch der Durchmesser des Kanals zum Leiten des fließfähigen Mediums.

Bevorzugt weist der stangenartige Körper wenigstens eine und bevorzugt zwei endseitige Öffnungen auf und/oder der Kanal erstreckt sich vollständig in der Längsrichtung des stangenartigen Körpers durch diesen hindurch. Bevorzugt ist der Durchmesser des Kanals über die Längsrichtung des stangenartigen Körpers hinweg konstant.

Bevorzugt ist dieser Kanal als Bohrung ausgebildet, die sich in der Längsrichtung des stangenartigen Körpers, bevorzugt vollständig in der Längsrichtung erstreckt. Bevorzugt weist diese Bohrung einen zylinderförmigen Querschnitt auf. Durch die Ausgestaltung dieser Bohrung kann wie oben erwähnt das Totraumvolumen entsprechender Anlagen, welche diesen stangenartigen Körper einsetzen verbessert werden.

Die vorliegende Erfindung ist weiterhin auf ein Verfahren zum Umformen von Kunststoffvorformlingen zu Kunststoffbehältnissen und insbesondere Kunststoffflaschen gerichtet, wobei wenigstens eine Umformungsstation die Kunststoffvorformlinge durch Beaufschlagung mit einem fließfähigen Medium und insbesondere mit einem gasförmigen Medium zu den Kunststoffbehältnissen umformt und wobei die Umformungsstation eine Blasform aufweist, welche einen Hohlraum ausbildet, innerhalb dessen die Kunststoffvorformlinge zu den Kunststoffbehältnissen umgeformt werden und wobei die Umformungsstation weiterhin eine Beaufschlagungseinrichtung aufweist, welche die Kunststoffvorformlinge mit dem fließfähigen Medium beaufschlagt sowie einen stangenartigen Körper der über eine Mündung der Kunststoffvorformlinge in die Kunststoffvorformlinge eingeführt wird und weiterhin eine Bewegungseinrichtung diesen stangenartigen Körper in der Längsrichtung der Kunststoffvorformlinge bewegt, insbesondere um die Kunststoffvorformlinge zu dehnen.

Weiterhin weist dieser stangenartige Körper einen Kanal zum Leiten des fließfähigen Mediums auf (bzw. das fließfähige Medium wird durch einen in dem stangenartigen Körper befindlichen Kanal geleitet) und eine Ventileinrichtung der Umformungsstation steuert die Zuführung des fließfähigen Mediums in diesem Kanal.

Erfindungsgemäß ist diese Ventileinrichtung an der Bewegungseinrichtung angeordnet und/oder ein Verhältnis zwischen einem Innendurchmesser des stangeartigen Körpers und dem Außendurchmesser des stangenartigen Körpers ist wenigstens abschnittsweise und bevorzugt vollständig kleiner als 0,5.

Es wird daher auch verfahrensseitig vorgeschlagen, dass das Ventil im Vergleich zum Stand der Technik näher an dem stangenartigen Körper angeordnet ist und/oder dieser die oben genannten Durchmesserverhältnisse aufweist.

Bei einem bevorzugten Verfahren werden die Kunststoffvorformlinge während eines Transports mit einer Transporteinrichtung von den Umformungsstationen zu Behältnissen umgeformt.

Bei einem weiteren bevorzugten Verfahren wird als Ventileinrichtung eine druckausgeglichene Ventileinrichtung verwendet beziehungsweise die Ventileinrichtung wird wenigstens zeitweise druckausgeglichen betrieben.

Bevorzugt wird über den stangenartigen Körper ein fließfähiges Medium und insbesondere Luft auf einen Bodenabschnitt eines Kunststoffvorformlings und/oder Kunststoffbehältnisses gelenkt.

Besonders bevorzugt erfolgt die Beaufschlagung des Kunststoffbehältnisses, nachdem dieses bereits vollständig zu einer Kunststoffflasche innerhalb der Blasform ausgeformt wurde.

Weitere Vorteile und Ausführungsformen ergeben sich aus den beigefügten Zeichnungen:
Darin zeigen:
Fig. 1 eine schematische Darstellung einer Anlage zum Umformen von Kunststoffvorformlingen zu Kunststoffbehältnissen;
Fig. 2 eine Darstellung einer Umformungsstation;
Fig. 3 eine Darstellung einer Umformungsstation nach dem Stand der Technik;
Fig. 4 eine Detaildarstellung der in Figur 3 gezeigten Umformungsstation;
Fig. 5 eine Detaildarstellung einer erfindungsgemäßen Umformungsstation;
Fig. 6 eine weitere Darstellung einer erfindungsgemäßen Umformungsstation;
Fig. 7 eine Darstellung einer Ventileinrichtung; und
Fig. 8 eine Darstellung eines stangenartigen Körpers.

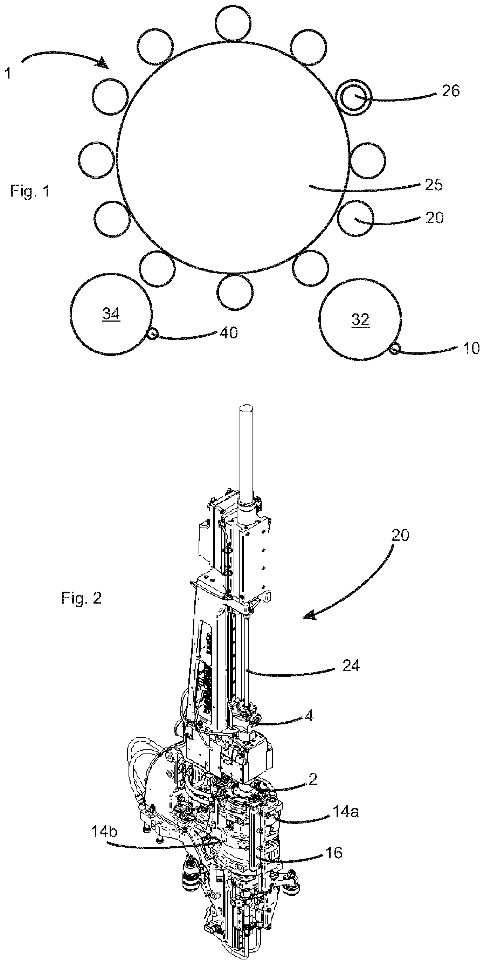

Figur 1 zeigt eine schematische Darstellung einer Umformungseinrichtung 1 zum Umformen von Kunststoffvorformlingen 10 zu Kunststoffbehältnissen und insbesondere Kunststoffflaschen 40. Dabei ist eine Zuführeinrichtung wie ein Zuführstern 32 vorgesehen, der erwärmte Kunststoffvorformlinge an eine Vielzahl von Umformungsstationen 20 übergibt. Diese sind dabei an einem drehbaren Träger 25, wie insbesondere einem sog. Blasrad angeordnet. In diesen Umformungsstationen werden die Kunststoffvorformlinge 10 zu den Kunststoffbehältnissen 40 umgeformt und anschließend von einer Abtransporteinrichtung 34, wie einem Abführstern abtransportiert.

Das Bezugszeichen 26 kennzeichnet grob schematisch eine Blasform, die in der Umformungsstation 20 angeordnet ist. Diese Blasform kann dabei zwei Seitenteile aufweisen, die zum Öffnen und Schließen der Kunststoffvorformlinge bezüglich einer Achse gegenübereinander schwenkbar sind.

Figur 2 zeigt eine Darstellung einer Umformungsstation 20. Diese weist einen stangenartigen Körper 24 wie eine Reckstange auf, der zum Dehnen der Kunststoffvorformlinge in deren Inneres eingeführt werden kann. Das Bezugszeichen 4 kennzeichnet eine Bewegungseinrichtung, welche diese Reckstange hierzu bewegt.

Das Bezugszeichen 2 kennzeichnet eine Beaufschlagungseinrichtung, welche die Kunststoffvorformlinge mit einem fließfähigen Medium und insbesondere mit Druckluft beaufschlagt. Die Bezugszeichen 14a und 14b kennzeichnen Seitenteilträger welche zum Tragen beziehungsweise Halten der Blasformteile der Blasform 26 geeignet und bestimmt sind. Das Bezugszeichen 16 kennzeichnet eine Verriegelungseinrichtung, welche während einer Expansion der Kunststoffvorformlinge die beiden Blasformteile beziehungsweise deren Seitenteilträger 14a und 14b aneinanderhält, beziehungsweise miteinander verriegelt.

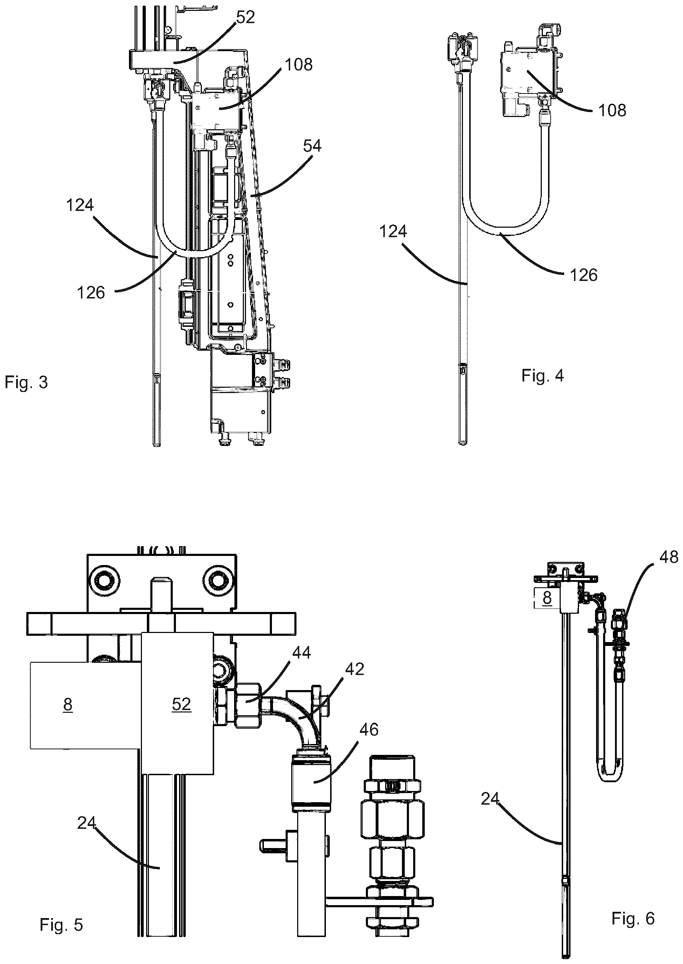

Figur 3 zeigt eine Detaildarstellung einer Umformungsstation nach dem Stand der Technik. Dabei ist ein Träger vorgesehen, an dem ein Bewegungselement 52 angeordnet ist. An diesem Bewegungselement 52 ist wiederum der stangenartige Körper 124 angeordnet. Das Bezugszeichen 108 kennzeichnet eine Ventileinrichtung, die über eine Leitung 126 wie einen Schlauch mit dem stangenartigen Körper verbunden ist. Das Innere dieses Schlauchs bildet ein Totraumvolumen, welches gemäß der Erfindung reduziert werden soll.

Figur 4 zeigt eine Detaildarstellung, wobei hier lediglich die Ventileinrichtung 108, die Leitungseinrichtung 126 und der stangenartige Körper 24 dargestellt sind.

Figur 5 zeigt eine erfindungsgemäße Umformungsstation. Auch hier ist wieder ein Bewegungselement 52 wie ein Reckschlitten vorgesehen. Dieses Bewegungselement kann ein Bestandteil der oben erwähnten Bewegungseinrichtung sein. Die Ventileinrichtung 8 ist bei dieser Ausgestaltung jedoch direkt an dem stangenartigen Körper 24 angeordnet. Das Bezugszeichen 46 kennzeichnet eine Arbeitsluftzuleitung, welche über eine Verbindungsleitung 42, die hier jedoch bevorzugt starr ausgebildet ist mit einem Anschluss 44 der Ventileinrichtung 8 verbunden ist. Auf diese Weise kann auf den in Figur 4 gezeigten Verbindungsschlauch 126 verzichtet werden und auf diese Weise wird das Totraumvolumen deutlich reduziert. Genauer gesagt ist die Ventileinrichtung bevorzugt direkt an dem stangenartigen Körper 24 angeordnet. Damit bewegt sich bevorzugt die Ventileinrichtung auch mit dem stangenartigen Körper 24 mit.

In Figur 6 ist eine weitere Darstellung einer erfindungsgemäßen Umformungsstation dargestellt. Das Bezugszeichen 46 bezieht sich dabei auf eine Steuerluftzuleitung, für den Fall, dass die Ventileinrichtung als pneumatisches Ventil ausgeführt ist.

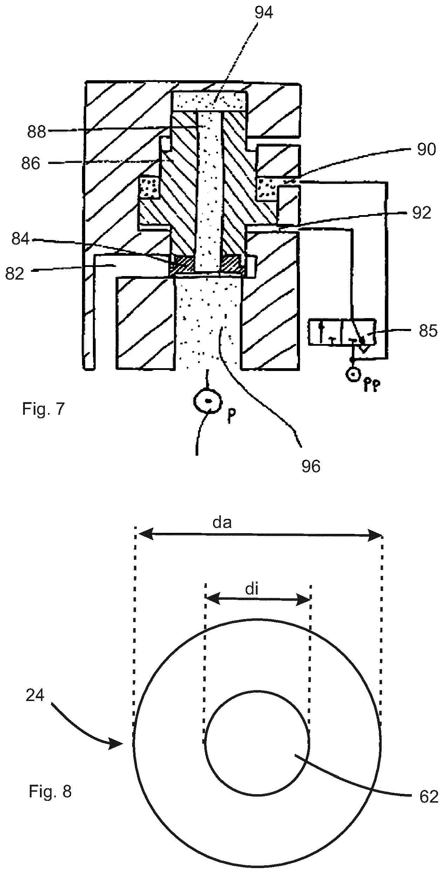

Figur 7 zeigt eine Detaildarstellung einer vorteilhaft verwendeten Ventileinrichtung, die hier als druckausgeglichenes Ventil ausgeführt ist. Dabei kennzeichnet das Bezugszeichen 82 der Ventileinrichtung und das Bezugszeichen 84 eine Ventildichtung.

Das Bezugszeichen 85 kennzeichnet ein Pilotventil, welches insbesondere zum Ansteuern der Ventileinrichtung dient. Die Bezugszeichen 90 und 92 kennzeichnen einen Steuerraum und insbesondere den durch das Pilotventil angesteuerten Steuerraum.

Das Bezugszeichen 88 kennzeichnet einen Verbindungsraum zwischen einer Dichtungsseite und einer Kolbenrückseite, über welchen der Druckausgleich bewirkt wird und das Bezugszeichen 94 den Druckraum der Kolbenrückseite. Das Bezugszeichen 86 kennzeichnet den Kolben der Ventileinrichtung.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

Figur 8 zeigt eine Schnittdarstellung eines stangenartigen Körpers 24 beziehungsweise eine Reckstange. Dabei beziehen sich die Bezugszeichen di und da auf den Innendurchmesser und auf den Außendurchmesser dieses stangenartigen Körpers. Man erkennt, dass der stangenartige Körper 24 bevorzugt ein zylinderförmiges Profil aufweist. Auch der Hohlraum beziehungsweise der Kanal 62, der hier als Bohrung ausgeführt ist, ist bevorzugt zylinderförmig ausgeführt.

### Bezugszeichenliste

- 1: Umformungseinrichtung
- 2: Beaufschlagungseinrichtung
- 4: Bewegungseinrichtung
- 8: Ventileinrichtung
- 10: Kunststoffvorformling
- 14a: Seitenteilträger
- 14b: Seitenteilträger
- 20: Umformungsstationen
- 24: stangenartiger Körper, Reckstange
- 25: Träger
- 26: Blasform
- 32: Zuführstern
- 34: Abtransporteinrichtung
- 40: Kunststoffflaschen
- 42: Verbindungsleitung
- 44: Anschluss
- 46: Arbeitsluftzuleitung
- 52: Bewegungselement, Reckschlitten
- 62: Kanal
- 82: Ventilausgang
- 84: Ventildichtung
- 85: Pilotventil
- 92: Steuerraum
- 90: Steuerraum
- 88: Verbindungsraum zwischen Dichtungsseite und Kolbenrückseite
- 86: Kolben
- 94: Druckraum Kolbenrückseite
- 108: Ventileinrichtung (Stand der Technik)
- 124: stangenartiger Körper (Stand der Technik)
- 126: Leitungseinrichtung
- di: Innendurchmesser
- da: Außendurchmesser

## Patentansprüche

1. Vorrichtung (1) zum Umformen von Kunststoffvorformlingen zu Kunststoffbehältnissen (40) mit wenigstens einer Umformungsstation (20), welche die Kunststoffvorformlinge durch Beaufschlagung mit einem fließfähigen Medium zu den Kunststoffbehältnissen (40) umformt, wobei die Umformungsstation eine Blasform (26) aufweist, welche einen Hohlraum ausbildet, innerhalb dessen die Kunststoffvorformlinge (10) zu den Kunststoffbehältnissen (40) umformbar sind und wobei die Umformungsstation weiterhin eine Beaufschlagungseinrichtung (2) aufweist, welche die Kunststoffvorformlinge mit dem fließfähigen Medium beaufschlagt sowie einen stangenartigen Körper (24), der über eine Mündung der Kunststoffvorformlinge in die Kunststoffvorformlinge (10) einführbar ist und eine Bewegungseinrichtung (4), welche dazu geeignet und bestimmt ist, diesen stangenartigen Körper (24) in der Längsrichtung der Kunststoffvorformlinge zu bewegen, wobei dieser stangenartige Körper (24) einen Kanal (62) zum Leiten des fließfähigen Mediums ausbildet, und die Umformungsstation eine Ventileinrichtung (8) aufweist, welche die Zuführung des fließfähigen Mediums in diesen Kanal (62) steuert,
**dadurch gekennzeichnet, dass**
diese Ventileinrichtung (8) an der Bewegungseinrichtung (4) angeordnet ist und ein Verhältnis zwischen einem Innendurchmesser (di) des stangenartigen Körpers und dem Außendurchmesser (da) des stangenartigen Körpers wenigstens abschnittsweise kleiner oder gleich 0,5 ist.

2. Vorrichtung nach Anspruch 1,
**dadurch gekennzeichnet, dass**
eine Bewegung der Ventileinrichtung (8) wenigstens zeitweise und bevorzugt vollständig an die Bewegung des stangenartigen Körpers (24) gekoppelt ist.

3. Vorrichtung (1) nach wenigstens einem der vorangegangenen Ansprüche,
**dadurch gekennzeichnet, dass**
die Ventileinrichtung (8) druckausgeglichen ausgeführt ist.

4. Vorrichtung (1) nach wenigstens einem der vorangegangenen Ansprüche,
**dadurch gekennzeichnet, dass**
die Ventileinrichtung (8) ein pneumatisch betätigtes Ventil ist.

5. Vorrichtung (1) nach wenigstens einem der vorangegangenen Ansprüche,
**dadurch gekennzeichnet, dass**
die Ventileinrichtung (8) an einem Abschnitt des stangenartigen Körpers (24) angeordnet ist.

6. Vorrichtung (1) nach wenigstens einem der vorangegangenen Ansprüche,
**dadurch gekennzeichnet, dass**
der stangenartige Körper (24) aus einem Metall und insbesondere aus einem Stahl gefertigt ist.

7. Vorrichtung (1) nach wenigstens einem der vorangegangenen Ansprüche,
**dadurch gekennzeichnet, dass**
der stangenartige Körper (24) wenigstens abschnittsweise beschichtet ist.

8. Vorrichtung (1) nach wenigstens einem der vorangegangenen Ansprüche,
**dadurch gekennzeichnet, dass**
das Material des stangenartigen Körpers (24) ein Halbzeug ist.

9. Verfahren zum Umformen von Kunststoffvorformlingen zu Kunststoffbehältnissen (40) mit wenigstens einer Umformungsstation (20), welche die Kunststoffvorformlinge durch Beaufschlagung mit einem fließfähigen Medium zu den Kunststoffbehältnissen (40) umformt, wobei die Umformungsstation eine Blasform (26) aufweist, welche einen Hohlraum ausbildet, innerhalb dessen die Kunststoffvorformlinge (10) zu den Kunststoffbehältnissen (40) umgeformt werden und wobei die Umformungsstation weiterhin eine Beaufschlagungseinrichtung aufweist, welche die Kunststoffvorformlinge mit dem fließfähigen Medium beaufschlagt sowie einen stangenartigen Körper (24), der über eine Mündung der Kunststoffvorformlinge in die Kunststoffvorformlinge eingeführt wird und wobei eine Bewegungseinrichtung (4) diesen stangenartigen Körper (24) in der Längsrichtung der Kunststoffvorformlinge bewegt, wobei dieser stangenartige Körper (24) einen Kanal (62) zum Leiten des fließfähigen Mediums ausbildet, und eine Ventileinrichtung (8) der Umformungsstation die Zuführung des fließfähigen Mediums in diesen Kanal (62) steuert,
**dadurch gekennzeichnet, dass**
diese Ventileinrichtung (8) an der Bewegungseinrichtung (4) angeordnet ist und ein Verhältnis zwischen einem Innendurchmesser (di) des stangenartigen Körpers (24) und dem Außendurchmesser (da) des stangenartigen Körpers wenigstens abschnittsweise kleiner oder gleich 0,5 ist.

## Claims

1. Apparatus (1) for forming plastic preforms into plastic containers (40), having at least one forming station (20) which forms the plastic preforms into the plastic containers (40) by being acted upon by a flowable medium, wherein the forming station having a blow mould (26) which forms a hollow space within which the plastic preforms (10) can be formed into the plastic containers (40), and wherein the forming station further comprising an application device (2) which acts upon the plastic preforms with the flowable medium and a rod-like body (24) which can be introduced into the plastic preforms (10) via a mouth of the plastic preforms, and a moving device (4) which is suitable and intended to move the rod-like body (24) in the longitudinal direction of the plastic preforms, wherein said rod-like body (24) forming a channel (62) for conducting the flowable medium, and the forming station comprises valve device (8) which controls the feed of the flowable medium into said channel (62),
**characterized in that**
said valve device (8) is arranged at the moving device (4) and a ratio between an inner diameter (di) of said rod-like body and the outer diameter (da) of said rod-like body is smaller than or equal to 0.5 at least in sections.

2. Apparatus according to claim 1,
**characterized in that**
a movement of the valve device (8) is at least temporarily and preferably completely coupled to the movement of the rod-like body (24).

3. Apparatus (1) according to at least one of the preceding claims,
**characterized in that**
the valve device (8) is pressure-balanced.

4. Apparatus (1) according to at least one of the preceding claims,
**characterized in that**
the valve device (8) is a pneumatically actuated valve.

5. Apparatus (1) according to at least one of the preceding claims,
**characterized in that**
the valve device (8) is arranged at a portion of the rod-like body (24).

6. Apparatus (1) according to at least one of the preceding claims,
**characterized in that**
the rod-like body (24) is made of a metal and in particular of a steel.

7. Apparatus (1) according to at least one of the preceding claims,
**characterized in that**
the rod-like body (24) is coated at least in sections.

8. Apparatus (1) according to at least one of the preceding claims,
**characterized in that**
the material of the rod-like body (24) is a semi-finished product.

9. Method for forming plastic preforms into plastic containers (40), having at least one forming station (20) which forms the plastic preforms into the plastic containers (40) by acting upon with a flowable medium, wherein the forming station comprising a blow mould (26) which forms a cavity within which the plastic preforms (10) are formed into the plastic containers (40), and wherein the forming station further comprises an application device which acts upon the plastic preforms with the flowable medium and a rod-like body (24) which is inserted into the plastic preforms via a mouth of the plastic preforms, and wherein a moving device (4) moves said rod-like body (24) in the longitudinal direction of the plastic preforms, wherein said rod-like body (24) forming a channel (62) for guiding the flowable medium, and a valve device (8) of the forming station controls the supply of the flowable medium into said channel (62),
**characterized in that**
said valve device (8) is arranged on the moving device (4) and a ratio between an inner diameter (di) of the rod-like body (24) and the outer diameter (da) of the rod-like body is smaller than or equal to 0.5 at least in sections.

## Revendications

1. Dispositif (1) pour le formage de préformes en matière plastique en récipients en matière plastique (40) avec au moins une station de formage (20) qui forme les préformes en matière plastique par alimentation en un fluide coulant en récipients en matière plastique (40), dans lequel la station de formage présente un moule de soufflage (26) qui réalise un espace creux, à l'intérieur duquel les préformes en matière plastique (10) sont formables en récipients en matière plastique (40) et dans lequel la station de formage présente en outre un dispositif d'alimentation (2) qui alimente les préformes en matière plastique en fluide coulant ainsi qu'un corps (24) de type tige qui peut être introduit par le biais d'une embouchure des préformes en matière plastique dans les préformes en matière plastique (10) et un dispositif de déplacement (4) qui est approprié et destiné à déplacer ce corps (24) de type tige dans le sens longitudinal des préformes en matière plastique, dans lequel ce corps (24) de type tige réalise un canal (62) pour la conduite du fluide coulant, et la station de formage présente un dispositif de soupape (8) qui commande la fourniture du fluide coulant dans ce canal (62),
**caractérisé en ce que**
ce dispositif de soupape (8) est agencé au niveau du dispositif de déplacement (4) et un rapport entre un diamètre intérieur (di) du corps de type tige et le diamètre extérieur (da) du corps de type tige est inférieur ou égal à 0,5 au moins par sections.

2. Dispositif selon la revendication 1,
**caractérisé en ce que**
un déplacement du dispositif de soupape (8) est couplé au moins temporairement et de préférence complètement au déplacement du corps (24) de type tige.

3. Dispositif (1) selon au moins l'une des revendications précédentes, **caractérisé en ce que**
le dispositif de soupape (8) est réalisé équilibré en pression.

4. Dispositif (1) selon au moins l'une des revendications précédentes,
**caractérisé en ce que**
le dispositif de soupape (8) est une soupape actionnée pneumatiquement.

5. Dispositif (1) selon au moins l'une des revendications précédentes,
**caractérisé en ce que**
le dispositif de soupape (8) est agencé au niveau d'une section du corps (24) de type tige.

6. Dispositif (1) selon au moins l'une des revendications précédentes,
**caractérisé en ce que**
le corps (24) de type tige est fabriqué en un métal et en particulier en un acier.

7. Dispositif (1) selon au moins l'une des revendications précédentes,
**caractérisé en ce que**
le corps (24) de type tige est revêtu au moins par sections.

8. Dispositif (1) selon au moins l'une des revendications précédentes,
**caractérisé en ce que**
le matériau du corps (24) de type tige est un demi-produit.

9. Procédé de formage de préformes en matière plastique en récipients en matière plastique (40) avec au moins une station de formage (20) qui forme les préformes en matière plastique par alimentation en un fluide coulant en récipients en matière plastique (40), dans lequel la station de formage présente un moule de soufflage (26) qui réalise un espace creux, à l'intérieur duquel les préformes en matière plastique (10) sont formées en récipients en matière plastique (40) et dans lequel la station de formage présente en outre un dispositif d'alimentation qui alimente les préforme en matière plastique en fluide coulant ainsi qu'un corps (24) de type tige qui est introduit par le biais d'une embouchure des préformes en matière plastique dans les préformes en matière plastique et dans lequel un dispositif de déplacement (4) déplace ce corps (24) de type tige dans le sens longitudinal des préformes en matière plastique, dans lequel ce corps (24) de type tige réalise un canal (62) pour la conduite du fluide coulant, et un dispositif de soupape (8) de la station de formage commande la fourniture du fluide coulant dans ce canal (62),
**caractérisé en ce que**
ce dispositif de soupape (8) est agencé au niveau du dispositif de déplacement (4) et un rapport entre un diamètre intérieur (di) du corps (24) de type tige et le diamètre extérieur (da) du corps de type tige est inférieur ou égal à 0,5 au moins par sections.
